# EUROPEAN PATENT SPECIFICATION

(11) **EP 2 808 178 B1**
(45) Date of publication and mention of the grant of the patent: **12.04.2017**
(21) Application number: 13741462.9
(22) Date of filing: 24.01.2013
(51) Int. Cl.: B60C 9/00, B60C 9/20

(54) **TIRE REINFORCING MEMBER AND PNEUMATIC TIRE USING SAME**
REIFENVERSTÄRKUNGSELEMENT UND LUFTREIFEN DAMIT
ÉLÉMENT DE RENFORCEMENT DE PNEUMATIQUE ET PNEUMATIQUE UTILISANT CET ÉLÉMENT

(30) Priority: 25.01.2012 JP 2012013204
(43) Date of publication of application: 03.12.2014
(73) Proprietor: Bridgestone Corporation, Tokyo 104-8340 (JP)
(72) Inventor: MIYAZONO, Toshiya, Kodaira-shi Tokyo 187-8531 (JP)
(74) Representative: Oxley, Robin John George
(86) International application number: PCT/JP2013/000365
(87) International publication number: WO 2013/111597

(56) References cited:
- JP-A- H1 134 617
- JP-A- S5 730 604
- JP-A- H02 208 101

## Description

### TECHNICAL FIELD

The present invention relates to a reinforcement member for a tire and a pneumatic tire using the reinforcement member for a tire. Specifically, the present invention relates to a reinforcement member for a tire suitably applicable to a carcass and/or a reinforcing layer and a pneumatic tire using the reinforcement member for a tire.

### BACKGROUND ART

A reinforcement member for a tire, constituted of a plurality of cords aligned in parallel to each other and rubber coating provided thereon, has been conventionally used in a pneumatic tire as a member constituting a carcass and/or a member constituting a reinforcing layer for reinforcing each part to be reinforced of a tire. Each cord of such a reinforcement member for a tire as described above may be either a cord constituted of a single strand formed by intertwining a plurality of filaments made of steel or organic fibers or a cord formed by intertwining a plurality of the single strands.

A reinforcement member for a tire, constituting a carcass, a reinforcing layer or the like of a tire, is subjected to tensile force when the tire is inflated and runs on a road. Cords of the reinforcement member for a tire is generally less stretchable than rubber coating the cords, whereby a pneumatic tire using the reinforcement member for a tire experiences strains generated at respective end portions in the cord extending direction of the reinforcement member for a tire, due to concentration of stress thereon, when the reinforcement member for a tire is subjected to tensile force during the air-charging and running operations of the tire. As a result, troubles like cracks and/or separations tend to occur in the pneumatic tire using the reinforcement member for a tire at the respective end portions in the cord extending direction of the reinforcement member when the cords and the like thereof are subjected to tensile force.

In view of the problem described above, there has been proposed, as a technique of suppressing concentration of stress at an end portion in the cord extending direction of a reinforcement member for a tire to reduce the occurrence of troubles and thus enhance durability of the tire, a technique of unraveling twined filaments at the end portion of a cord constituting the reinforcement member for a tire so that the filaments extend in a loosened and dispersed manner at the end portion of the reinforcement member (e.g. PTL 1).

Specifically, PTL 1 proposes a technique of unraveling twined filaments of a steel cord 50 at an end portion 51 thereof so that the end portion 51 of the cord 50 is constituted of the filaments 52 extending linearly in a dispersed manner, to disperse stress concentrated at the corresponding end portion in the cord extending direction of the reinforcement member for a tire, constituted of the cords 50 and coating rubber provided thereon (not shown), to reduce the occurrence of troubles in the tire.

### CITATION LIST

### Patent Literature

PTL 1: JP57-030604

### SUMMARY OF THE INVENTION

### Technical Problems

However, the aforementioned conventional reinforcement member for a tire, using cords each having end portions where twined filaments have been unraveled so that the filaments extend linearly in a dispersed manner, cannot mitigate stress concentration in a satisfactory manner when the reinforcement member for a tire is subjected to tensile force. In other words, the aforementioned conventional reinforcement member for a tire still has room for improvement in terms of mitigating stress concentration thereon in a satisfactory manner to enhance durability of a pneumatic tire using the reinforcement member for a tire.

In view of this, a first object of the present invention is to provide a reinforcement member for a tire, which member is capable of mitigating stress concentration at respective end portions in the cord extending direction thereof in a satisfactory manner when the reinforcement member is subjected to tensile force. Further, a second object of the present invention is to provide a pneumatic tire, which is capable of suppressing concentration of stress at an end portion in the cord extending direction of a reinforcement member for the tire to reduce the occurrence of troubles therein and thus can exhibit good durability.

### Solution to the Problems

The present inventions aims at advantageously solving the aforementioned prior art problems by achieving the first and second objects described above. For achieving the first object, the present invention provides a reinforcement member for a tire, constituted of a plurality of cords aligned in parallel to each other and coating rubber provided thereon, characterized in that: each of the cords is constituted of a plurality of filaments; each cord has the cord center portion formed by the intertwined filaments and respective cord end portions positioned at respective sides in the cord extending direction of the cord center portion; and at least one of the cord end portions is constituted of a plurality of the filaments each formed in a wavy or spiral shape and extending separately in an unraveled manner.

In the present invention, an expression that cords are "aligned in parallel to each other" does not represent that the cords are aligned strictly in parallel to each other in mathematical terms but simply represents that the cords extend in the same direction. Further, an expression that the "filaments extend in an unraveled manner" represent that these filaments are not twined, i.e. twist pitch thereof is infinite.

For achieving the second object to advantageously solve the aforementioned prior art problems, the present invention provides a pneumatic tire, characterized in that the tire uses the aforementioned reinforcement member for a tire for at least one of a carcass and a reinforcing layer thereof. It is possible, by applying the aforementioned reinforcement member for a tire to a pneumatic tire, to suppress concentration of stress at respective end portions in the cord extending direction of a reinforcement member for the tire, reduce the occurrence of troubles therein and enhance durability of the tire. Advantageous Effect of the Invention

According to the reinforcement member for a tire of the present invention, it is possible to mitigate concentration of stress at respective end portions in the cord extending direction thereof in a satisfactory manner when the reinforcement member is subjected to tensile force. Further, according to the pneumatic tire of the present invention, it is possible to provide a tire, which is capable of suppressing concentration of stress at respective end portions in the cord extending direction of a reinforcement member for the tire to reduce the occurrence of troubles therein and thus can exhibit good durability.

### BRIEF DESCRIPTION OF THE DRAWINGS

FIG. 1 is a cross sectional view in the tire width direction of a representative pneumatic tire according to the present invention.
FIG. 2 is an explanatory view showing an internal structure of a representative reinforcement member for a tire according to the present invention by removing a part of the reinforcement member for a tire in an exploded manner.
FIG. 3 is a perspective view showing in an enlarged manner a vicinity of an end portion of a cord of the reinforcement member for a tire shown in FIG. 2.
FIG. 4 is a perspective view showing in an enlarged manner a vicinity of an end portion of a cord of a conventional reinforcement member for a tire.

### DESCRIPTION OF THE EMBODIMENTS

An embodiment of the present invention will be described in detail hereinafter with reference to the drawings. A pneumatic tire of the present invention is characterized in that it uses the reinforcement member for a tire of the present invention as a member constituting a carcass and/or a member constituting a reinforcing layer for reinforcing each part to be reinforced thereof. Further, the reinforcement member for a tire is characterized in that: it is constituted of a plurality of cords and coating rubber provided thereon; each cord has the cord center portion and respective cord end portions; the cord center portion is formed by the intertwined filaments and at least one of the respective cord end portions is constituted of a plurality of the filaments each formed in a wavy or spiral shape and extending separately in an unraveled manner.

### (Pneumatic tire)

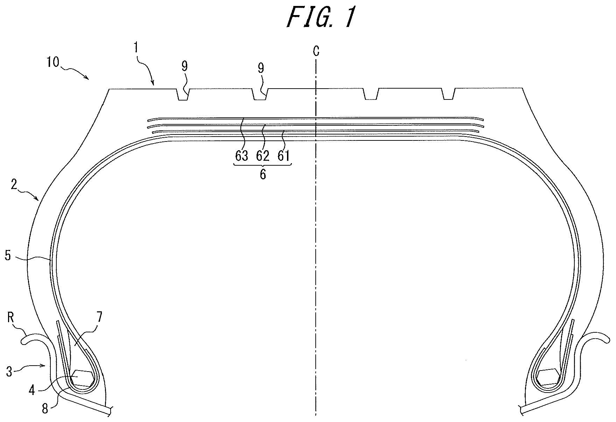

FIG. 1 is a view showing a cross section in the tire width direction of one example of a pneumatic tire according to the present invention in a state where the tire has been assembled with a rim R.

The pneumatic tire 10 shown in FIG. 1 has: a tread portion 1, a pair of sidewall portions 2 extending from respective side portions of the tread portion 1 toward the inner side in the tire radial direction, and bead portions 3 respectively provided to be continuous with the corresponding sidewall portions 2 on the inner side in the tire radial direction thereof.

Further, the pneumatic tire 10 has a single ply radial carcass 5 extending across the pair of bead portions 3. The radial carcass 5 extends in a toroidal shape from the tread portion 1 via the pair of sidewall portions 2 to the pair of bead portions 3 and is folded up around each bead core 4 having a substantially hexagonal cross section embedded in the corresponding bead portion 3 from the inner side toward the outer side in the tire width direction. The radial carcass of the pneumatic tire of the present invention may be constituted of two or more plies, according to necessity, although the radial carcass shown in FIG. 1 is a single ply carcass. Further, the carcass of the pneumatic tire of the present invention may be a bias carcass. Yet further, how the carcass is to be folded up is not particularly restricted in the pneumatic tire of the present invention and, for example, the carcass may be wound around each of the bead cores.

A belt 6 is embedded on the outer side in the tire radial direction (i.e. on the outer peripheral side of a crown portion) of the radial carcass 5 in the tread portion 1. The belt 6 is constituted of three belt layers 61, 62, 63 provided in this order in the tire radial direction and each of the belt layers is formed by coating cords aligned at a predetermined angle with respect to the tire circumferential direction with rubber. The belt layers 61, 62 form intersecting belts, in which cords of one belt layer extend to intersect cords of the other belt layer with respect to the tire equatorial plane CL. The number of the belt layers may be set as desired in the pneumatic tire of the present invention, although the belt layer 6 shown in FIG. 1 is constituted of three belt layers 61, 62, 63 in total. The pneumatic tire of the present invention may further include a belt reinforcing layer provided on the outer side in the tire radial direction of the belt.

A tread rubber is provided on the outer side in the tire radial direction of the belt 6. A plurality of grooves 9 are formed at a surface of the tread rubber, i.e. at a ground contact surface of the tread portion.

A bead filler 7 having a substantially triangular cross section is provided on the outer side in the tire radial direction of the bead core 4 of each bead portion 3 such that thickness of the bead filler 7 gradually decreases toward the outer side in the radial direction along the radial carcass 5. A wire chafer 8 for protecting the radial carcass 5 is provided on the radial carcass 5 on one side thereof opposite to the other side thereof facing the bead core 4 in each bead portion 3.

The pneumatic tire 10 of the present invention characteristically employs the reinforcement member for a tire of the present invention in at least one of the radial carcass 5, the belt layer 61, 62, 63 as a reinforcing layer for reinforcing each part to be reinforced of the tire, and the wire chafer 8. The radial carcass 5 and the belt layers 61, 62 forming intersecting belts are preferably constituted of the reinforcement member for a tire of the present invention in the pneumatic tire 10.

### (Reinforcement member for tire)

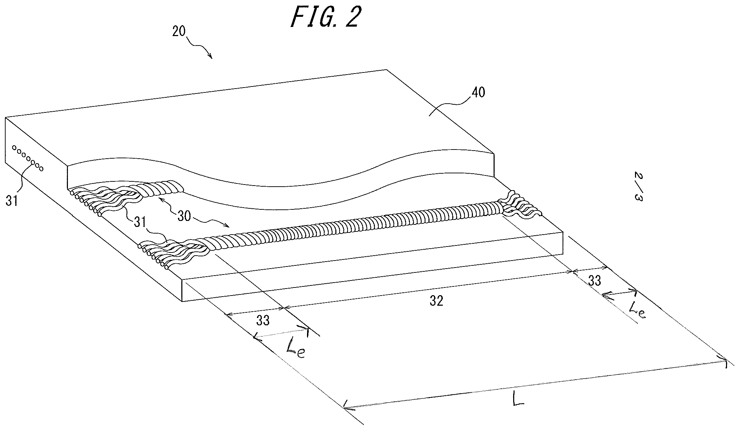

FIG. 2 is an explanatory view showing an example of the reinforcement member for a tire according to the present invention by removing a part of the reinforcement member in an exploded manner. The reinforcement member 20 for a tire shown in FIG. 2 is applicable, without particular restriction, to any suitable member such as the radial carcass 5 and the reinforcing layers of various types of the pneumatic tire 10 shown in FIG. 1.

The reinforcement member 20 for a tire shown in FIG. 2 is formed by coating a layer of a plurality of cords 30 horizontally aligned in parallel to each other with coating rubber 40. A rubber composition generally for use in the industry can be used as the coating rubber 40 for coating the cords 30. Specific examples of a rubber component of the coating rubber 40 include natural rubber (NR), isoprene rubber (IR), styrene butadiene rubber (SBR), butadiene rubber (BR), and a mixture thereof, without particular restriction thereto.

Each of the cords 30 is constituted of a plurality (seven in FIG. 2) of filaments 31. Specifically, each cord 30 has the cord center portion 32 formed by intertwining a plurality of the filaments 31 and respective cord end portions 33 positioned at respective outer sides in the cord extending direction of the cord center portion 32. The filaments 31 may be either filaments made of steel or filaments made of organic fibers such as nylon fibers, aramid fibers, polyethylene terephthalate (PET) fibers, polyethylene naphthalate (PEN) fibers, and the like. That is, the cords 30 may be either steel cords or organic fiber cords. The cord center portion of each cord of the reinforcement member for a tire of the present invention may be formed by intertwining a plurality of strands each formed by intertwining a plurality of the filaments, although the cord center portion 32 of each cord 30 shown in FIG. 2 is constituted of a single strand formed by intertwining a plurality of the filaments 31. How the filaments and the strands constituting the cord center portion of each cord are to be intertwined, respectively, may be decided as desired in the reinforcement member for a tire of the present invention.

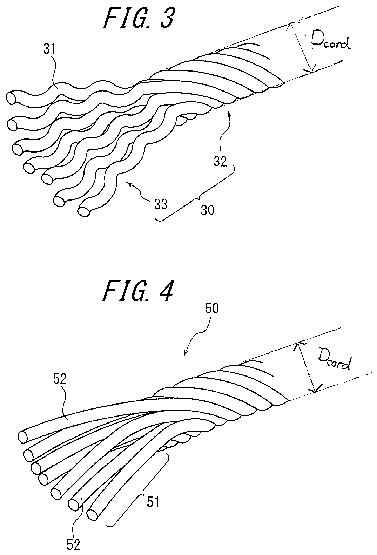

The filaments 31 are not intertwined but extend separately in an unraveled manner in each cord end portion 33 of the cord 30, as shown in FIG. 3 (a vicinity of an end portion of the cord 30 is shown in an enlarged manner in FIG. 3). Specifically, the filaments 31, which are intertwined in the cord center portion 32, have been unraveled in each of the cord end portions 33 so that twist pitch of the filaments 31 is infinite in the cord end portion. Further, the filaments 31 constituting each cord end portion 33 have been formed in a wavy shape. The filaments of only one cord end portion may be unraveled in the reinforcement member for a tire of the present invention, although both of the cord end portions 33 of the cord 30 have been unraveled in FIG. 2.

The filaments 31 at each cord end portion 33 can be unraveled and formed into a wavy shape as explained in (1) to (3) below, for example, without particularly being restricted thereto.
(1) First, at least a portion of each of the filaments 31 constituting the cord 30, which portion corresponds to the cord end portion 33, is formed in advance to a wavy shape. Such forming of the filaments 31 can be carried out by the known forming process generally employed in the industry. Either the entire portion or only the portion corresponding to the cord end portion 33, of each filament 31, may be subjected to the forming process.
(2) Next, a cord is formed by intertwining the wavy-formed (i.e. wavy-shaped) filaments 31. A laminate body is then formed by aligning a plurality of the cords thus formed in parallel to each other and coating the aligned cords with unvulcanized coating rubber 40. Each of the cords is entirely constituted of the intertwined filaments 31 at this stage.
(3) Thereafter, a portion corresponding to the cord end portion 33, of the laminate body constituted of the cords and unvulcanized coating rubber 40 provided thereon, is brought into contact with a brush made of metal or polymer compound and then the brush is vibrated, so that the wavy-formed filaments 31 positioned in the cord end portion 33 are unraveled to extend separately.

In the process (3) above, the filaments may be unraveled by clamping the portion corresponding to the cord end portion 33 (the portion which is to constitute the cord end portion 33) of the laminate body with two metal pressing plates and then slidingly moving at least one of the pressing plates. In the process (3) above, in a case where the filaments are made of organic fibers, the filaments may be unraveled by clamping the portion corresponding to the cord end portion 33 of the laminate body with two metal pressing plates heated at temperature around 110-190 °C and slidingly moving at least one of the pressing plates. Further, in the process (3) above, the filaments maybe unraveled by using a brush with simultaneously removing the coating rubber 40 of the laminate body, positioned in the portion corresponding to the cord end portion 33, with the brush. In the case where the filaments 31 have been unraveled with removing the coating rubber 40, the resulting laminate body may be used as the reinforcement member 20 for a tire either in a state where the filaments 31 positioned in the cord end portion 33 are not coated with the coating rubber 40 or after the filaments 31 positioned in the cord end portion 33 in the exposed state have been coated with the coating rubber 40 again. In short, the reinforcement member for a tire of the present invention does not need to be entirely covered with the coating rubber.

The reinforcement member 20 for a tire described above, where each of the cords has the cord center portion 32 constituted of the intertwined filaments 31, can avoid too much deterioration in the reinforcing capacity of the reinforcement member 20 for a tire due to a significant decrease in rigidity of the cord 30. Accordingly, the reinforcement member 20 for a tire can exhibit such good performance as expected of a member constituting a carcass or a reinforcing layer.

Further, the reinforcement member 20 for a tire, where in at least one of the cord end portions 33 thereof the wavy-shaped filaments 31 constituting the cord end portion(s) have been unraveled to extend separately, can mitigate concentration of stress at the end portion(s) in the cord extending direction of the reinforcement member in a satisfactory manner when the reinforcement member 20 is subjected to tensile force. Specifically, concentration of stress at the cord end portion 33 is effectively dispersed by the filaments 31 unraveled to extend separately and is also mitigated by the filaments 31 each formed into a wavy shape and thus having good stretchablility in the reinforcement member 20 for a tire when the reinforcement member 20 is subjected to tensile force, so that generation of strains therein can be suppressed. It is therefore possible, according to the reinforcement member 20 for a tire, to mitigate concentration of stress at the end portion(s) in the cord extending direction thereof in a satisfactory manner when the reinforcement member is subjected to tensile force.

Accordingly, it is possible to sufficiently mitigate stress concentration at end portions of a carcass and a reinforcing layer (i.e. the portions where the cord end portions 33 are positioned) of a tire, while attaining a satisfactory reinforcing effect, by applying the reinforcement member 20 for a tire to the carcass and the reinforcing layer, thereby successfully suppressing generation of troubles like cracks and/or separations in the tire. As a result, the pneumatic tire using the reinforcement member 20 for a tire exhibits significantly enhanced durability and a prolonged product life.

In the present embodiment, provided that Lₑ represents length (in the cord extending direction) of the cord end portion 33 and D_{cord} represents the diameter of the cord 30 at the cord center portion 32, it is preferable that D_{ord} × 5 ≤ Lₑ ≤ D_{cord} × 20 in terms of sufficiently mitigating stress concentration with ensuring satisfactory reinforcing performance of the reinforcement member 20 for a tire. Further, provided that L represents length in the cord extending direction of the reinforcement member 20 for a tire (i.e. length in the cord extending direction of the cord 30), it is preferable that L × 0.02 ≤ Lₑ ≤ L × 0.1. It is possible to make the wavy-formed (shaped) filaments 31 sufficiently long and ensure that the filaments are unraveled to extend separately, thereby mitigating stress concentration in a satisfactory manner, by setting Lₑ ≥ D_{cord} × 5 or Lₑ ≥ L × 0.02. Further, it is possible to ensure high rigidity of the cord 30 and suppress deterioration of reinforcing performance of the reinforcement member 20 for a tire by setting Lₑ ≤ D_{cord} × 20 or Lₑ ≤ L × 0.1. Diameter of the cord can be measured by a method using a micrometer, for example, according to JIS G3510. A "length in the cord extending direction" of a cord represents a distance between respective ends of the cord, measured in a direction parallel to the cord extending direction of the cord center portion of the cord.

Regarding wavelengths and amplitudes of the filaments 31 each having a wavy shape and positioned at the cord end portion 33, a ratio of the amplitude with the wavelength (i.e. amplitude/wavelength) R_{f} is preferably 0.05 ≤ R_{f} ≤ 0.5 in terms of further mitigating concentration of stress. It is possible to ensure satisfactory stretchability of the wavy-shaped filaments 31, thereby mitigating stress concentration at the cord end portion 33 to suppress generation of strains, by setting the ratio R_{f} to be ≥ 0.05. Further, it is possible to suppress excessive movement of the wavy-shaped filaments 31 in the amplitude direction thereof when the filaments are subjected to tensile force, thereby suppressing heat generation by the reinforcement member 20 for a tire due to the movements of the filaments 31 and ensuring good durability of the reinforcement member 20 for a tire, by setting the ratio R_{f} to be ≤ 0.5.

One example of the reinforcement member for a tire and the pneumatic tire using the same of the present invention has been described above with reference to the drawings. The reinforcement member for a tire and the pneumatic tire using the same of the present invention, however, is not restricted to the one example and can be modified in an appropriate manner. Specifically, for example, the filaments positioned at the cord end portion of the reinforcement member for a tire of the present invention may be formed into a spiral shape, although the filaments 31 positioned at the cord end portion 33 is formed into a wavy shape in the reinforcement member for a tire of the aforementioned one example. Concentration of stress at an end portion in the cord extending direction of the reinforcement member for a tire when the reinforcement member for a tire is subjected to tensile force can be well mitigated in the case where the filaments positioned at the cord end portion is formed into a spiral shape instead of a wavy shape.

### Examples

The present invention will be further described in detail by Examples below, without any particular restriction thereto.

### (Example 1)

A reinforcement member for a tire having the characteristics shown in Table 1 and the structure as shown in FIG. 2 was prepared. A sample tire for truck/bus having size: 275/80R22.5 was then prepared by applying the reinforcement member for a tire thus prepared to an interesting belt of the sample tire. A drum endurance test was carried out for the sample tire thus prepared, by: assembling the tire with an application rim as prescribed in JATMA; inflating the tire at the normal internal pressure (900 kPa) and applying load of 5520 kg, corresponding to 160% of the normal load; running the tire on a drum at velocity: 65 km/hour at temperature: 35°C under the aforementioned conditions of the tire; and measuring a running distance travelled by the tire prior to occurrence of troubles therein.

The running distance of the sample tire thus measured was divided by the running distance of the sample tire of Conventional Example 1 described below and the quotient thus calculated was regarded as durability of the sample tire, for evaluation. The results of the sample tire are shown in Table 1.

### (Example 2)

A reinforcement member for a tire having the characteristics shown in Table 1 and the structure as shown in FIG. 2 was prepared. A sample tire for truck/bus having size: 11R22.5 was then prepared by applying the reinforcement member for a tire thus prepared to a radial carcass of the sample tire. A drum endurance test was carried out for the sample tire thus prepared in the same manner as in Example 1, to measure a running distance travelled by the tire prior to occurrence of troubles therein.

The running distance of the sample tire thus measured was divided by the running distance of the sample tire of Conventional Example 2 described below and the quotient thus calculated was regarded as durability of the sample tire, for evaluation. The results of the sample tire are shown in Table 1.

### (Example 3)

A reinforcement member for a tire having the characteristics shown in Table 1 and the structure as shown in FIG. 2 was prepared. A sample tire for a passenger car having size: 155/65R13 was then prepared by applying the reinforcement member for a tire thus prepared to a radial carcass of the sample tire. A drum endurance test was carried out for the sample tire thus prepared, by: assembling the tire with an application rim as prescribed in JATMA; inflating the tire at the normal internal pressure (240 kPa) and applying load of 475 kg, corresponding to 130% of the normal load; running the tire on a drum at velocity: 60 km/hour at temperature: 37°C under the aforementioned conditions of the tire; and measuring a running distance travelled by the tire prior to occurrence of troubles therein.

The running distance of the sample tire thus measured was divided by the running distance of the sample tire of Conventional Example 3 described below and the quotient thus calculated was regarded as durability of the sample tire, for evaluation. The results of the sample tire are shown in Table 1.

### (Example 4)

A reinforcement member for a tire having the characteristics shown in Table 1 and the structure as shown in FIG. 2 was prepared. A sample tire for a passenger car having size: 255/40R19 was then prepared by applying the reinforcement member for a tire thus prepared to an intersecting belt of the sample tire. A drum endurance test was carried out for the sample tire thus prepared in the same manner as in Example 3, to measure a running distance travelled by the tire prior to occurrence of troubles therein.

The running distance of the sample tire thus measured was divided by the running distance of the sample tire of Conventional Example 4 described below and the quotient thus calculated was regarded as durability of the sample tire, for evaluation. The results of the sample tire are shown in Table 1.

### (Example 5)

A reinforcement member for a tire having the characteristics shown in Table 1 and the structure as shown in FIG. 2 was prepared. A sample tire for a passenger car having size: 195/65R15 was then prepared by applying the reinforcement member for a tire thus prepared to a radial carcass of the sample tire. A drum endurance test was carried out for the sample tire thus prepared in the same manner as in Example 3, to measure a running distance travelled by the tire prior to occurrence of troubles therein.

The running distance of the sample tire thus measured was divided by the running distance of the sample tire of Conventional Example 5 described below and the quotient thus calculated was regarded as durability of the sample tire, for evaluation. The results of the sample tire are shown in Table 1.

### (Example 6)

A reinforcement member for a tire having the characteristics shown in Table 1 and the structure as shown in FIG. 2 was prepared. A sample tire for a construction vehicle having size: 59/80R63 was then prepared by applying the reinforcement member for a tire thus prepared to an intersecting belt of the sample tire. A drum endurance test was carried out for the sample tire thus prepared, by: assembling the tire with an application rim as prescribed in JATMA; inflating the tire at the normal internal pressure (600 kPa) and applying load of 180,000 kg, corresponding to 180% of the normal load; running the tire on a drum at velocity: 17 km/hour at temperature: 39°C under the aforementioned conditions of the tire; and measuring a running distance travelled by the tire prior to occurrence of troubles therein.

The running distance of the sample tire thus measured was divided by the running distance of the sample tire of Conventional Example 6 described below and the quotient thus calculated was regarded as durability of the sample tire, for evaluation. The results of the sample tire are shown in Table 1.

### (Examples 7 to 10)

Reinforcement members for tires, as well as respective sample tires corresponding thereto, of Examples 7 to 10 were prepared in the same manner as in Example 1, except that some characteristics were changed as shown in Table 2 in the formers.

A drum endurance test was carried out for each of the sample tires thus prepared in the same manner as in Example 1, to measure a running distance travelled by the tire prior to occurrence of troubles therein.

The running distances of the sample tires thus measured were divided by the corresponding running distances of the sample tires of Conventional Examples 7 to 10 described below, respectively, and the quotients thus calculated were regarded as durability values of the sample tires of Examples 7 to 10, for evaluation. The results of the sample tires are shown in Table 2.

### (Conventional Examples 1 to 10)

Reinforcement members for tires, as well as respective sample tires corresponding thereto, of Conventional Examples 1 to 10 were prepared in the same manner as in Examples 1 to 10, except that cords having linear filaments at cord end portions thereof as shown in FIG. 4 were used in the formers.

Drum endurance tests were carried out for the sample tires thus prepared in the same manner as in Examples 1 to 10, to measure running distances travelled by the tires prior to occurrence of troubles therein, respectively.

**[Table 1]**

| | | Example 1 | Example 2 | Example 3 | Example 4 | Example 5 | Example 6 |
|---|---|---|---|---|---|---|---|
| Tire size | | 275/80R22.5 | 11R22.5 | 155/65R13 | 255/40R19 | 195/65R15 | 59/80R63 |
| Tire component member to which reinforcement member was applied | | Intersecting belt | Carcass | Carcass | Intersecting belt | Carcass | Intersecting belt |
| Material of cord | | Steel | Steel | PET (1670/2dtex) | Steel | PET (1670/2dtex) | Steel |
| Dimension in tire width direction of reinforcement member [mm] | | 190 | 190 | 120 | 215 | 160 | 480 |
| Cord inclination angle with respect to tire circumferential direction [°] | | 72 | 72 | 68 | 68 | 68 | 71 |
| Cord length | | 615 | 615 | 320 | 574 | 427 | 1474 |
| Cord center portion | Twine structure | 6×0.35 | 3×0.25+9×0.23 | 39×39 | 5×0.23 | 39×39 | 7×(3+9)×035 |
| | Cord diameter [mm] | 1.13 | 0.94 | 0.65 | 0.81 | 0.68 | 4.5 |
| | Length [mm] | 601 | 603 | 306 | 556 | 415 | 1458 |
| Cord end portion | Filament configuration | Wavy | Wavy | Wavy | Wavy | Wavy | Wavy |
| | Length [mm] | 7 | 6 | 7 | 9 | 6 | 8 |
| | Amplitude/wavelength [-] | 0.1 | 0.09 | 0.3 | 0.1 | 0.27 | 0.1 |
| Durability (Example/Conventional Example) | | 1.18 | 1.15 | 1.12 | 1.18 | 1.10 | 1.13 |

**Table 2**

| | | Example 7 | Example 8 | Example 9 | Example 10 |
|---|---|---|---|---|---|
| Tire size | | 275/80R22.5 | 275/80R22.5 | 275/80R22.5 | 275/80R22.5 |
| Tire component member to which reinforcement member was applied | | Intersecting belt | Intersecting belt | Intersecting belt | Intersecting belt |
| Material of cord | | Steel | Steel | Steel | Steel |
| Dimension in tire width direction of reinforcement member [mm] | | 190 | 190 | 190 | 190 |
| Cord inclination angle with respect to tire circumferential direction [°] | | 72 | 72 | 72 | 72 |
| Cord length | | 615 | 615 | 615 | 615 |
| Cord center portion | Twine structure | 6×0.35 | 6×0.35 | 6×0.35 | 6×0.35 |
| | Cord diameter [mm] | 1.13 | 1.13 | 1.13 | 1.13 |
| | Length [mm] | 608.2 | 467 | 605 | 605 |
| Cord end portion | Filament configuration | Wavy | Wavy | Wavy | Wavy |
| | Length [mm] | 3.39 | 74 | 5 | 5 |
| | Amplitude/wavelength [-] | 0.1 | 0.1 | 0.04 | 0.6 |
| Durability (Example/Conventional Example) | | 1.05 | 1.01 | 1.04 | 1.04 |

It is understood from Tables 1 and 2 that the tires of Examples 1 to 10 exhibit better durability than the tires of Conventional Examples 1 to 10.

### INDUSTRIAL APPLICABILITY

According to the present invention, it is possible to provide a reinforcement member for a tire, which is capable of mitigating concentration of stress at respective end portions in the cord extending direction thereof in a satisfactory manner when the reinforcement member is subjected to tensile force. Further, according to the present invention, it is possible to provide a pneumatic tire, which is capable of suppressing concentration of stress at respective end portions in the cord extending direction of a reinforcement member for the tire to reduce the occurrence of troubles therein and thus can exhibit good durability.

### REFERENCE SIGNS LIST

- 1: Tread portion

- 2: Sidewall portion
- 3: Bead portion
- 4: Bead core
- 5: Radial carcass
- 6: Belt
- 7: Bead filler
- 8: Wire chafer
- 9: Groove
- 10: Pneumatic tire
- 20: Reinforcement member for tire
- 30: Cord
- 31: Filament
- 32: Cord center portion
- 33: Cord end portion
- 40: Coating rubber
- 50: Cord
- 51: End portion
- 52: Filament
- 61: Belt layer
- 62: Belt layer
- 63: Belt layer

## Claims

1. A reinforcement member (20) for a tire, constituted of a plurality of cords (30) aligned in parallel to each other and coating rubber (40) provided thereon,wherein
each of the cords (30) is constituted of a plurality of filaments (31);
each cord (30) has the cord center portion (32) formed by the intertwined filaments (31) and respective cord end portions (33) positioned at respective sides in the cord extending direction of the cord center portion (32); **characterized in that**
at least one of the cord end portions (33) is constituted of a plurality of the filaments (31) each formed in a wavy or spiral shape and extending separately in an unraveled manner.

2. The reinforcement member (20) for a tire of claim 1, wherein provided that Lₑ represents length in the cord extending direction of the cord end portion (33), D_{cord} represents the diameter of the cord at the cord center portion (32), and L represents length in the cord extending direction of the cord (30), D_{cord} × 5≤Lₑ≤L×0.1.

3. The reinforcement member (20) for a tire of claim 1 or 2, wherein provided that Lₑ represents length in the cord extending direction of the cord end portion (33), D_{cord} represents the diameter of the cord at the cord center portion (32), and L represents length in the cord extending direction of the cord (30), D_{cord} × 5≤Lₑ≤ D_{cord} × 20.

4. The reinforcement member (20) for a tire of claim 1, 2 or 3, wherein provided that Lₑ represents length in the cord extending direction of the cord end portion (33) and L represents length in the cord extending direction of the cord (30), L × 0.02 ≤ Lₑ ≤ L × 0.1.

5. The reinforcement member (20) of any preceding claim wherein ratio of amplitude to wavelength is greater than or equal to 0.05 and less than or equal to 0.5.

6. A pneumatic tire, **characterized in that** it uses the reinforcement member (20) for a tire of any of claims 1 to 5 for at least one of a carcass and a reinforcing layer thereof

## Patentansprüche

1. Verstärkungselement (20) für einen Reifen, bestehend aus mehreren Kords (30), die parallel zueinander ausgerichtet sind, und auf denselben bereitgestelltem Überzugsgummi (40), wobei
jeder der Kords (30) aus mehreren Filamenten (31) besteht,
jeder Kord (30) den Kordmittelabschnitt (32), der durch die verwobenen Filamente (31) gebildet wird, und jeweilige Kordendabschnitte (33), die an jeweiligen Seiten des Kordmittelabschnitts (32) in der Kordausdehnungsrichtung angeordnet sind, hat, **dadurch gekennzeichnet, dass**
wenigstens einer der Kordendabschnitte (33) aus mehreren Filamenten (31) besteht, die jeweils in einer welligen oder spiraligen Gestalt geformt sind und sich gesondert auf eine aufgedrehte Weise erstrecken.

2. Verstärkungselement (20) für einen Reifen nach Anspruch 1, wobei, vorausgesetzt, dass Lₑ die Länge des Kordendabschnitts (33) in der Kordausdehnungsrichtung darstellt, D_{cord} den Durchmesser des Kords an dem Kordmittelabschnitt (32) darstellt und L die Länge des Kords (30) in der Kordausdehnungsrichtung darstellt, D_{cord} × 5 ≤ Lₑ × L × 0,1.

3. Verstärkungselement (20) für einen Reifen nach Anspruch 1 oder 2, wobei, vorausgesetzt, dass Lₑ die Länge des Kordendabschnitts (33) in der Kordausdehnungsrichtung darstellt, D_{cord} den Durchmesser des Kords an dem Kordmittelabschnitt (32) darstellt und L die Länge des Kords (30) in der Kordausdehnungsrichtung darstellt, D_{ord} × 5 ≤ Lₑ ≤ D_{ord} × 20.

4. Verstärkungselement (20) für einen Reifen nach Anspruch 1, 2 oder 3, wobei, vorausgesetzt, dass Lₑ die Länge des Kordendabschnitts (33) in der Kordausdehnungsrichtung darstellt und L die Länge des Kords (30) in der Kordausdehnungsrichtung darstellt, L × 0,02 ≤ Le ≤ L × 0,1.

5. Verstärkungselement (20) für einen Reifen nach einem der vorhergehenden Ansprüche, wobei ein Verhältnis von Amplitude zu Wellenlänge größer oder gleich 0,05 und kleiner oder gleich 0,5 ist.

6. Luftreifen, **dadurch gekennzeichnet, dass** er das Verstärkungselement (20) für einen Reifen nach einem der Ansprüche 1 bis 5 für wenigstens eines von einer Karkasse und einer Verstärkungslage desselben verwendet.

## Revendications

1. Élément de renfort (20) pour pneumatique, constitué d'une pluralité de cordes (30), alignées parallèlement les unes aux autres, et d'un revêtement de caoutchouc (40) prévu sur celles-ci ;
chacune des cordes (30) étant constituée d'une pluralité de filaments (31),
chaque corde (30) possédant une partie centrale de corde (32) composée des filaments (31) entrelacés ainsi que des parties terminales de corde (33) respectives situées sur des côtés respectifs de la partie centrale de corde (32) dans le sens de l'étendue de la corde, **caractérisé en ce que**
au moins une des parties terminales de corde (33) est constituée d'une pluralité de filaments (31) présentant chacun une forme ondulée ou spiralée et s'étendant séparément en se décordant.

2. Élément de renfort (20) pour pneumatique selon la revendication 1, dans lequel, sachant que Lₑ représente la longueur de la partie terminale de corde (33) dans le sens de l'étendue de la corde, D_{cord} représente le diamètre de la corde au niveau de la partie centrale de corde (32) et L représente la longueur de la corde (30) dans le sens de l'étendue de la corde, D_{cord} × 5 ≤ Lₑ ≤ L × 0,1.

3. Élément de renfort (20) pour pneumatique selon la revendication 1 ou 2, dans lequel, sachant que Lₑ représente la longueur de la partie terminale de corde (33) dans le sens de l'étendue de la corde, D_{cord} représente le diamètre de la corde au niveau de la partie centrale de corde (32) et L représente la longueur de la corde (30) dans le sens de l'étendue de la corde, D_{cord} × 5 ≤ Lₑ ≤ D_{cord} × 20,

4. Élément de renfort (20) pour pneumatique selon la revendication 1, 2 ou 3, dans lequel, sachant que Lₑ représente la longueur de la partie terminale de corde (33) dans le sens de l'étendue de la corde et L représente la longueur de la corde (30) dans le sens de l'étendue de la corde, L × 0,02 ≤ Lₑ ≤ L × 0,1.

5. Élément de renfort (20) selon l'une quelconque des revendications précédentes, dans lequel le rapport entre l'amplitude et la longueur d'onde est supérieur ou égal à 0,05 et inférieur ou égal à 0,5.

6. Pneumatique, **caractérisé en ce qu'**il met en oeuvre l'élément de renfort (20) pour pneumatique selon l'une quelconque des revendications 1 à 5 pour sa carcasse et/ou une couche de renfort.
